(19) Europäisches Patentamt
European Patent Office
Office européen des brevets

(11) **EP 4 296 611 B1**

(12) **EUROPEAN PATENT SPECIFICATION**

(45) Date of publication and mention of the grant of the patent:
**29.10.2025 Bulletin 2025/44**

(21) Application number: **23176326.9**

(22) Date of filing: **31.05.2023**

(51) International Patent Classification (IPC):
***G01B 7/06*** *(2006.01)*    ***G01N 27/02*** *(2006.01)*
***G01N 27/90*** *(2021.01)*

(52) Cooperative Patent Classification (CPC):
**G01B 7/10;** G01N 27/025

(54) **THICKNESS MEASURING DEVICE USING EDDY CURRENTS AND CORRESPONDING MEASUREMENT METHOD**

DICKENMESSVORRICHTUNG MIT WIRBELSTRÖMEN UND ENTSPRECHENDES MESSVERFAHREN

DISPOSITIF DE MESURE D'ÉPAISSEUR PAR COURANTS DE FOUCAULT ET PROCÉDÉ DE MESURE CORRESPONDANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.06.2022 IT 202200013327**

(43) Date of publication of application:
**27.12.2023 Bulletin 2023/52**

(73) Proprietors:
- **Di Capua, Giulia**
  **84084 Fisciano (SA) (IT)**
- **Ferrigno, Luigi**
  **84085 Mercato San Severino (SA) (IT)**
- **Laracca, Marco**
  **04023 Formia (LT) (IT)**
- **Sardellitti, Alessandro**
  **03036 Isola del Liri (FR) (IT)**
- **Tamburrino, Antonello**
  **84084 Fisciano (SA) (IT)**
- **Ventre, Salvatore**
  **81030 Carinola (CE) (IT)**

(72) Inventors:
- **Di Capua, Giulia**
  **84084 Fisciano (SA) (IT)**
- **Ferrigno, Luigi**
  **84085 Mercato San Severino (SA) (IT)**
- **Laracca, Marco**
  **04023 Formia (LT) (IT)**
- **Sardellitti, Alessandro**
  **03036 Isola del Liri (FR) (IT)**
- **Tamburrino, Antonello**
  **84084 Fisciano (SA) (IT)**
- **Ventre, Salvatore**
  **81030 Carinola (CE) (IT)**

(74) Representative: **Studio Torta S.p.A.**
**Via Viotti, 9**
**10121 Torino (IT)**

(56) References cited:
- **LU MINGYANG ET AL: "A Novel Compensation Algorithm for Thickness Measurement Immune to Lift-Off Variations Using Eddy Current Method", IEEE TRANSACTIONS ON INSTRUMENTATION AND MEASUREMENT, IEEE, USA, vol. 65, no. 12, 1 December 2016 (2016-12-01), pages 2773 - 2779, XP011633463, ISSN: 0018-9456, [retrieved on 20161108], DOI: 10.1109/TIM.2016.2600918**
- **YIN WULIANG ET AL: "A Novel Triple-Coil Electromagnetic Sensor for Thickness Measurement Immune to Lift-Off Variations", IEEE TRANSACTIONS ON INSTRUMENTATION AND MEASUREMENT, IEEE, USA, vol. 65, no. 1, 1 January 2016 (2016-01-01), pages 164 - 169, XP011592930, ISSN: 0018-9456, [retrieved on 20151207], DOI: 10.1109/TIM.2015.2479106**

EP 4 296 611 B1

• YIN ET AL: "Thickness measurement of non-magnetic plates using multi-frequency eddy current sensors", NDT&E INTERNATIONAL, ELSEVIER, AMSTERDAM, NL, vol. 40, no. 1, 1 January 2007 (2007-01-01), pages 43 - 48, XP005696862, ISSN: 0963-8695, DOI: 10.1016/J.NDTEINT.2006.07.009

**Description**

TECHNICAL FIELD

This solution relates to a thickness measuring device for measuring thickness using eddy currents and to a corresponding measurement method.

BACKGROUND

The need is known, in particular in the industrial field, to carry out thickness measurements for the purpose of production control. For example, the need to measure the thickness of metal laminates during processing of industrial components is known.

Known techniques for measuring thickness generally involve measurements by contact, for example by means of thickness gauges or feelers.

Measurement techniques without physical contact with the component being measured can however be particularly advantageous in various applications, for example in the event that the same component reaches high temperatures during the production process.

In this respect, measurements using ultrasonic sensors have been proposed, which carry out measurements through emission and reception of ultrasounds.

The ultrasonic techniques may include both contact techniques (in the case of probes using a coupling gel for sound coupling with the analysed specimen) and non-contact techniques (in the case of probes using air for sound coupling with the analysed specimen).

The ultrasonic techniques in general do not allow high accuracy in the case of laminates with very thin thicknesses and moreover such techniques are quite complex and expensive.

Non-contact techniques involving the use of a laser have also been proposed; these techniques are used quite frequently, but they are complex and expensive, too.

Non-destructive technique for measuring thickness based on eddy currents have also been proposed in the art.

In general, the principle of operation of an eddy-current measurement consists in the use of a coil which, excited by an alternating electrical signal, induces eddy currents in the conductive object under test. The excitation coil itself or another coil (denoted as detection or pickup coil) measures the reaction magnetic field due to the eddy currents, indicative of the geometric and physical characteristics of the object under test.

For example, W. Yin, A. J. Peyton, "Thickness measurement of non-magnetic plates using multi-frequency eddy current sensors", NDT&E International, vol. 40, n. 1, pages 43-48, January 2007; and M. Lu, L. Yin, A. J. Peyton, W. Yin, "A Novel Compensation Algorithm for Thickness Measurement Immune to Lift-Off Variations Using Eddy Current Method", IEEE Trans. on Instrumentation and Measurement, vol. 65, no. 12, pages 2773-2779, December 2016, describe methods for measuring the thickness of planar conductive sheets of non-magnetic material using eddy currents.

In particular, it is described that the peak, or minimum, frequency of the imaginary part of the inductance variation (or similarly the peak, or minimum, frequency of the actual part of the impedance variation), which occurs when an eddy-current sensor is placed next to a non-magnetic metal sheet, compared to the case where the same sensor is placed in air, is inversely proportional to the thickness of the same sheet; this frequency can therefore provide an indication directly associated to the thickness.

In particular, the relationship between the inductance variation ($\Delta L$) and the impedance variation ($\Delta R$) applies:

$$Im(\Delta L) = Im\left(\frac{\dot{Z}_{m,lamina}(f) - \dot{Z}_{m,aria}(f)}{j \cdot 2 \cdot \pi \cdot f}\right) = Re\left(\frac{-[\dot{Z}_{m,lamina}(f) - \dot{Z}_{m,aria}(f)]}{2 \cdot \pi \cdot f}\right)$$
$$= \frac{\Delta R}{\omega}$$

In detail, the thickness, indicated with c, can be calculated by the following expression:

$$c = \frac{\alpha_0}{\sigma \cdot \mu_0 \cdot \pi \cdot f_{min}}$$

wherein $\sigma$ is the electrical conductivity of the sheet, $\mu_0$ is the vacuum magnetic permeability, $f_{min}$ is the aforesaid (minimum) peak frequency and $\alpha_0$ is a characteristic variable of the measurement system defined as a characteristic spatial frequency, associated only with the geometry of the same measurement system.

In this regard, as also described in detail in the aforesaid articles, the Dood and Deeds' model, discussed in C. V. Dodd, W. E. Deeds, "Analytical Solutions to Eddy-Current Probe-Coil Problems", Journal of Applied Physics, vol. 39, no. 6, pages 2829-2838, May 1968, describes how it is possible to derive self-impedance and mutual-inductance respectively in the case of a single-coil and double-coil probe in air or placed on a conductive, planar and infinite plate.

Given a system with cylindrical coordinates, the analytical solution represented by differential equations can be obtained by applying the method of separation of variables; to demonstrate the conditions at the contour of the system it is required to solve the system for an infinite number of values for $\alpha$ ($\alpha$ ranges from 0 to $+\infty$).

The use of the parameter $\alpha_0$ arises from an approximation of the terms of the Bessel integral with a sinusoid; in particular, the term $\alpha$ is replaced by the constant value $\alpha_0$ and this approximation allows to develop the Dood and Deeds equations so as to be able to link the peak frequency ($f_{min}$) to the thickness of the analysed sheet.

After an appropriate calibration of the measurement system, for the determination of the aforesaid variables $f_{min}$ and $\alpha_0$, it is therefore possible to determine the thickness c of the object under examination.

However, the present Applicant has found that the solution described in this article, although promising, does not lend itself to use in the industrial field, where the speed of measurement and the variability of measurement conditions are important factors to be considered.

In particular, the present Applicant has verified that, by analysing the aforesaid expression in an inverse way:

$$\alpha_0 = \sigma \cdot \mu_0 \cdot \pi \cdot f_{min} \cdot c$$

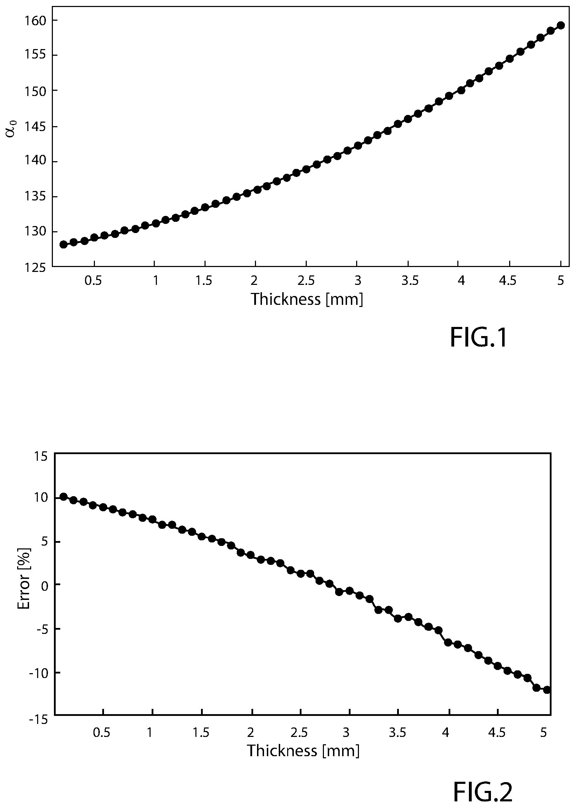

it is possible to note that, for wide ranges of thicknesses analysed, the characteristic variable $\alpha_0$ is not actually constant, but has a strong dependence on the thickness, as shown by the corresponding plot in Figure 1 (corresponding to an exemplary range of thickness values).

The lack of prior knowledge of the actual value of this parameter therefore leads to an error, which is greater the wider the thickness range that it is desired to analyse, as shown in Figure 2, which corresponds to the example of the aforesaid Figure 1.

In the industrial field, a solution that provides for repeated execution of preliminary calibration procedures, necessary for the determination of the correct value of the aforesaid characteristic variable $\alpha_0$ (which may differ significantly from a nominal value), cannot be implemented.

Furthermore, the present Applicant has found that, in order to obtain a good accuracy in estimating the thickness of the laminate, it is necessary to accurately estimate the aforesaid peak frequency $f_{min}$.

An accurate estimation of this frequency, however, entails using a high number of frequencies in the sinusoidal signal for excitation of the coil of the sensor device, with an adequate frequency resolution (i.e. the interval between one frequency and the other), for example less than 5 Hz; measurement times are thus very high, due to the use of sinusoidal signals at the individual frequencies.

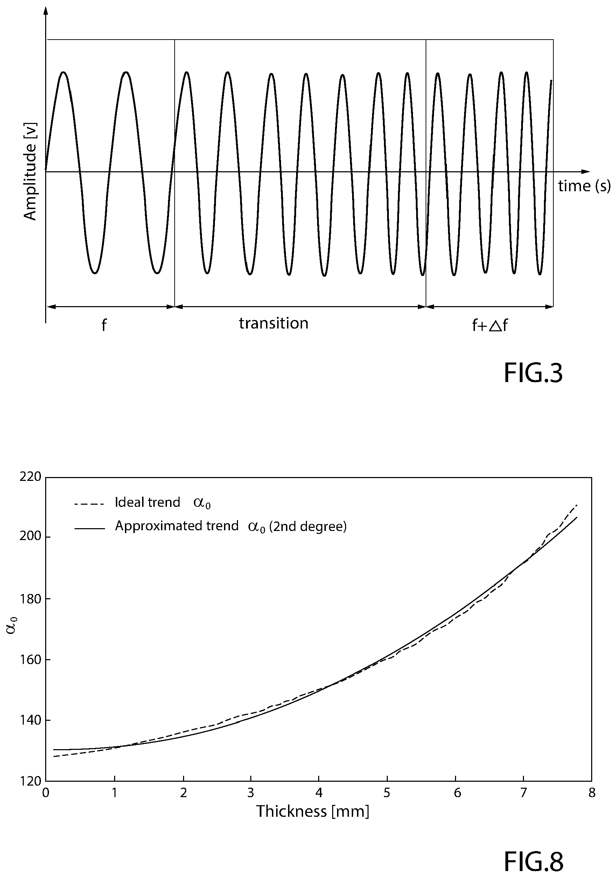

As shown in Figure 3, in fact, a measurement interval associated with each excitation frequency f is required, followed by a delay interval for the transition to the next excitation frequency ($f+\Delta f$), with a considerable overall duration of the measurement operation, which can easily exceed tens of seconds.

The resulting time interval may obviously not be compatible with industrial needs (for example in the case of on-line, real-time or near-real-time production control).

Although being an interesting method for non-contact thickness measurement, the solution described in the aforesaid articles cannot be exploited for the realization of a thickness measuring device for measuring thickness for industrial use.

Lu Mingyang et al. "A Novel Compensation Algorithm for Thickness Measurement Immune to Lift-Off Variations Using Eddy Current Method", IEEE Transactions on Instrumentation and Measurement, IEEE, USA, vol. 65, no. 12, pages 2773-2779, 2016, discloses an algorithm that can compensate for lift-off variation that may cause errors in the eddy current thickness measurements of metallic plates; the algorithm produces an index that is linked to the thickness, but is virtually independent of lift-off.

SUMMARY

An object of the present solution is generally to provide a technique for measuring thickness that allows to overcome the previously highlighted disadvantages of the known techniques.

According to the present solution, a thickness measuring device and a corresponding method for measuring thickness are therefore provided, as described in the appended claims.

BRIEF DESCRIPTION OF THE DRAWINGS

To better understand the present invention preferred embodiments thereof will now be described, for merely exemplary and non-limiting purposes, with reference to the appended drawings, wherein:

- Figures 1-3 show plots of quantities relating to a technique for measuring thickness using eddy currents;
- Figure 4 is a general block diagram of a thickness measuring device according to an aspect of the present solution;
- Figure 5 is a more detailed diagram of a processing stage of the device of Figure 4;
- Figure 6 shows a plot of a measurement function associated with thickness measurement carried out by the device of Figure 4;
- Figure 7 is a flowchart of operations of optimization of a characteristic variable associated with the thickness measurement; and
- Figure 8 shows a plot relating to an interpolation function used for approximation of the quantity $\alpha_0$ and the consequent thickness estimation.

DESCRIPTION OF EMBODIMENTS

As will be described in detail below, one aspect of the present solution entails implementing a technique for measuring thickness by means of eddy currents which is generally based on the solution described in the aforesaid articles (in the name of W. Yin et al.), but which overcomes the limitations highlighted above.

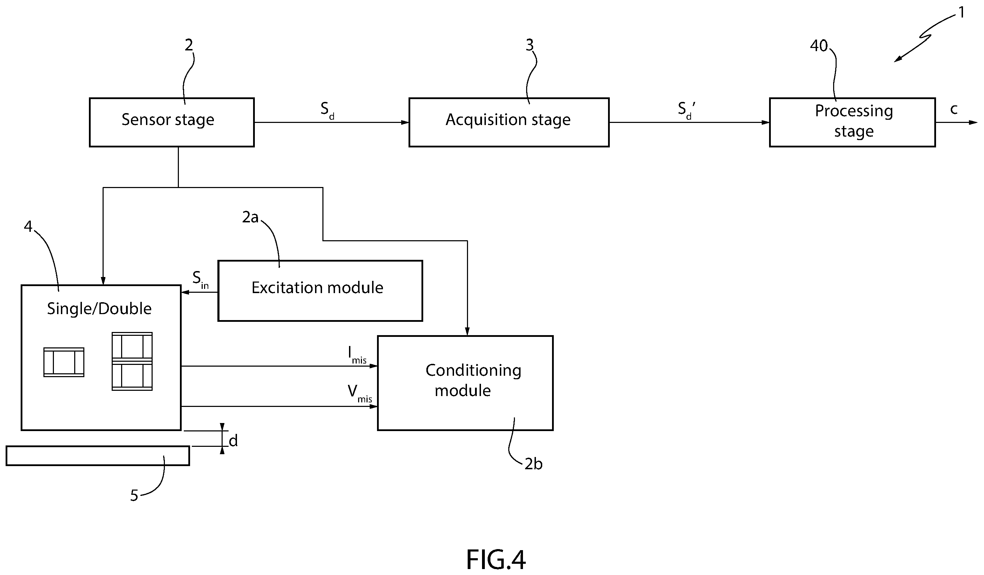

As schematically shown in Figure 4, a thickness measuring device 1 according to an embodiment of the present solution comprises: an eddy-current type sensor stage 2; an acquisition stage 3, coupled to the sensor stage 2; and a processing stage 40, coupled to the acquisition stage 3.

In detail, the sensor stage 2 comprises a coil element 4 with air core (wrapped in air), of the single (having both excitation and signal detection function) or double type (having a first excitation winding and a second detection winding).

The coil element 4 is configured to be arranged, during operation, at a given distance d from an object 5 under test, the thickness of which has to be determined, for example a planar sheet of conductive, in particular metallic, non-magnetic material (or, alternatively, to be arranged in air).

The sensor stage 2 further comprises: an excitation module 2a, configured to provide an excitation signal $S_{in}$ to the coil element 4 so as to evaluate its response in a given frequency interval, in particular for estimating the aforesaid peak frequency $f_{min}$; and a conditioning module 2b, configured to receive from the coil element 4 one or more measurement signals, in the example a current signal, $I_{meas}$, and a voltage signal, $V_{meas}$, in response to the excitation by the excitation module 2a and to appropriately process the same measurement signals, for example by amplification and filtering, providing at its output corresponding detection signals $S_d$.

The acquisition stage 3 is configured to acquire such detection signals $S_d$ from the sensor stage 2, and in particular to perform the analogue to digital conversion of the same signals.

The processing stage 40 receives the digital signals $S_d'$ resulting from the aforesaid conversion and is configured to perform appropriate processing of the same signals, to determine and provide at its output a thickness indication c for the object 5 (which can for example be used by an external system to implement a production control relatively to the same object 5).

According to an aspect of the present solution, the aforesaid excitation module 2a is configured to provide a multi-frequency or multi-sine excitation signal $S_{in}$, so as to avoid the use in consecutive times of several sinusoidal signals at different excitation frequencies and thus reduce the measurement times (the use of a multi-frequency signal being in fact able to excite simultaneously the coil element 4 with a number of sinusoidal contributions at the frequencies required for the test).

The use of fewer frequencies (required to ensure a fair compromise between maximum overall power of the generated excitation signal $S_{in}$, frequency resolution and minimum stimulation power of the material at the various frequencies) can be compensated during processing by using interpolating polynomials, as will be described in detail below.

The general expression of a multi-sine type excitation signal $S_{in}$ can be defined as follows:

$$S_{in}(t) = \sum_{k=1}^{N_S} \sqrt{2} \cdot I_k \cdot \sin(2 \cdot \pi \cdot f_k \cdot t + \varphi_k)$$

where $I_k$ is the effective (RMS) value of the k-th sinusoid, $f_k$ is the frequency of the k-th sinusoid, $\varphi_k$ is the phase of the k-th sinusoid, and $N_S$ represents the total number of sinusoids (tones) that make up the multi-sine signal.

Phase $\varphi_k$ is defined as:

$$\varphi_k = -\pi \cdot \frac{k \cdot (k-1)}{N_S}$$

The choice of the number of tones $N_S$ is determined by the measurement set-up used. In particular, considering that the total effective value (RMS) of the multi-sine signal is defined as the sum of the effective values of each individual tone:

$$I_{RMS} = \sqrt{\sum_{k=1}^{N_S} I_k^2}$$

it is required to consider a number of tones that allows an adequate compromise between the number of tones $N_S$ used to estimate with good accuracy the peak frequency $f_{min}$ and the effective value of each individual tone that it is wished to acquire through the measurement set-up.

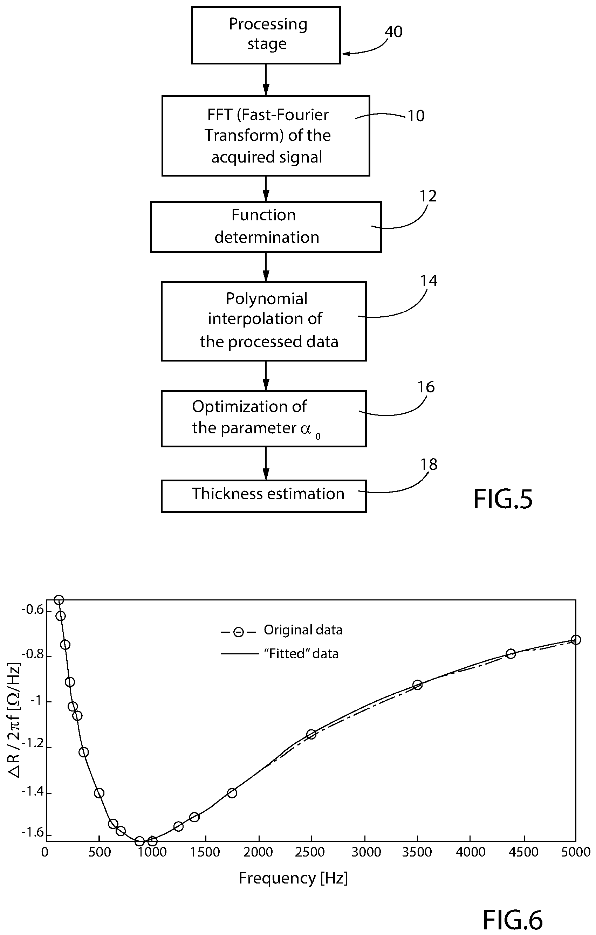

Referring now to Figure 5, the processing stage 40 of the thickness measuring device 1 comprises a frequency transform module 10, configured to receive the aforesaid digital signals $S_d$' and to perform a frequency transform thereof, in particular a Fast Fourier Transform (FFT).

The processing stage 40 further comprises a function determination module 12, configured to obtain, starting from the aforesaid frequency transform, a particular measurement function, defined as $\Delta R/\omega$ linked to the variation between the impedance values measured by the coil element 4 in air ($\dot{Z}_{m,air}$) and near the object 5 ($\dot{Z}_{m,laminate}$), in analogy to what has been described above and envisaged by the solution described in the aforesaid articles.

In detail, this measurement function $\Delta R/\omega$ is represented by the real part of the impedance variation (corresponding to the imaginary part of the inductance variation), as indicated by the following expression:

$$\frac{\Delta R}{\omega} = Im\left(\frac{-\dot{Z}_{m,laminate}(f) - \dot{Z}_{m,air}(f)}{j \cdot \omega}\right) = Re\left(\frac{-[\dot{Z}_{m,laminate}(f) - \dot{Z}_{m,air}(f)]}{\omega}\right)$$

wherein $\omega = 2 \cdot \pi \cdot f$ is the angular frequency and f the frequency of the excitation signal $S_{in}$.

As described above, the thickness c (that it is desired to measure) of the object 5 is linked to the frequency (peak frequency $f_{min}$) at which the value of the aforesaid function $\Delta R/\omega$ reaches its minimum value, according to the expression (already reported above):

$$c = \frac{\alpha_0}{\sigma \cdot \mu_0 \cdot \pi \cdot f_{min}}$$

Figure 6 shows the trend of the aforesaid function $\Delta R/\omega$, processed by the function determination module 12; in particular, it is highlighted that the function is actually determined at a limited number of frequency tones, as a result of the use of the aforementioned multi-frequency (or multi-sine) type excitation signal $S_{in}$, for the excitation of the coil element 4.

According to an aspect of the present solution, the processing stage 40 thus comprises (see again Figure 5) a polynomial interpolation module 14, configured to carry out a polynomial interpolation of data processed by the aforesaid function determination module 12, so as to determine an interpolation function that performs an appropriate "fitting" of the aforesaid data, as shown by the solid line in the aforesaid Figure 6.

The use of an interpolation polynomial allows to compensate for the reduction in the number of frequencies linked to the number of tones used in the multi-sine signal; the appropriate choice of the interpolation polynomial allows to obtain good accuracies in estimating the peak frequency value $f_{min}$.

In particular, the present Applicant has considered four different interpolation techniques, which can be used to determine the aforesaid interpolation function:

- fourth-degree interpolating polynomial (FOIP);
- fourth-degree Chebyshev polynomial (FOCIP), see for example M. R. Eslahchi, M. Dehghan, S. Amani, "The third and fourth kinds of Chebyshev polynomials and best uniform approximation", Mathematical and Computer Modelling, vol.

55, no. 5-6, pages 1746-1762, March 2012;

- Akima interpolating polynomial (MAIP), see for example H. Akima, "A new method of interpolation and smooth curve fitting based on local procedures", Journal of the ACM, vol.17, no. 4, pages 589-602, October 1970;
- Hermite piecewise interpolating polynomial (PCHIP), see for example F. N. Fritsch, R. E. Carlson, "Monotone Piecewise Cubic Interpolation", SIAM Journal on Numerical Analysis, vol. 17, no. 2, pages 238-246, April 1980.

Specifically, for comparative purposes, two different classes of interpolation techniques were considered: a first class (FOIP and FOCIP) uses the entire set of data to determine the polynomial equation; while the second class (MAIP and PCHIP) determines the polynomial equation not by considering the entire set of data, but by dividing it into many subsets where the polynomial equation is determined in each piece (piecewise interpolation).

In any case, it is underlined that the number of interpolating techniques that can be used is not limited to the four techniques mentioned, as it can be extended using other possible types of interpolating techniques known in the art.

Referring again to Figure 5, the processing stage 40 of the thickness measuring device 1 further comprises:

an optimization module 16 for optimization of the aforesaid characteristic variable $\alpha_0$, configured to estimate an optimized value for the same variable, regardless of the knowledge of a nominal thickness of the object 5 and not requiring a complex dedicated calibration step;

and a thickness estimation module 18, configured to determine an estimate of the thickness c of the object 5 as a function of the aforesaid optimized value of the characteristic variable $\alpha_0$, in particular on the basis of the formula mentioned above.

According to a first embodiment, the aforesaid optimization module 16 is configured to implement, for the determination of the characteristic variable $\alpha_0$, an iterative method which, at every iteration, corrects the value of $\alpha_0$ (and, as a consequence, of the estimated thickness c) starting from an average value of $\alpha_0$ relating to a predefined thickness range.

The iterations and the consequent corrections of the value of $\alpha_0$ end when the estimated thickness of an i +1-th iteration lies within a range of error relative to the thickness estimated at a prior i-th iteration.

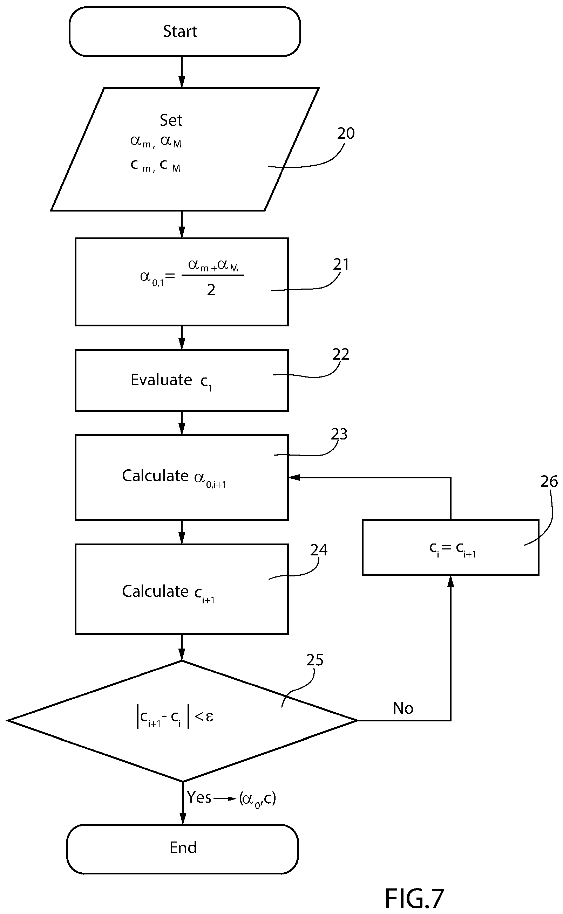

In detail, and referring to Figure 7, this optimization method 16 entails, in an initial step 20, setting a minimum value $(c_m)$ and a maximum value $(c_M)$ for the aforesaid thickness c (defined as a function of the thickness range that the device will have to measure) and a corresponding minimum value $(\alpha_m)$ and a maximum value $(\alpha_M)$ for the aforesaid characteristic variable $\alpha_0$.

Then, step 21, an average value for the same characteristic variable $\alpha_0$ is determined, which corresponds to a value at the initial step $\alpha_{0,1}$, on the basis of the aforesaid minimum and maximum values previously established:

$$\alpha_{0,1} = \frac{\alpha_m + \alpha_M}{2}$$

In a subsequent step 22, a first thickness estimation $c_1$ is evaluated corresponding to the aforesaid average value $\alpha_{0,1}$ of the characteristic variable $\alpha_0$ and the value, determined experimentally (and which will remain identical with each subsequent iteration) of the peak frequency $f_{min}$.

Then, step 23 (repeated at every iteration of the iterative method), the next value of the characteristic variable $\alpha_0$ is calculated iteratively, for example with the corrective expression:

$$\alpha_{0,i+1} = \frac{(c_i - c_M) \cdot \alpha_m - (c_i - c_m) \cdot \alpha_M}{(c_m - c_M)}$$

with the value $c_i$ which, at the first iteration, corresponds to the aforesaid first thickness estimation $c_1$.

In a step 24, a new value of the estimated thickness value is then calculated, according to the following expression (using the value $\alpha_{0,i+1}$ determined previously in the aforesaid step 23):

$$c_{i+1} = \frac{\alpha_{0,i+1}}{\sigma \cdot \mu_0 \cdot \pi \cdot f_{min}}$$

As shown in step 25, it is then verified whether the difference between the i+1-th and i-th values of the estimated thickness is lower, in absolute value, than a preset threshold $\varepsilon$ (for example corresponding to an error of 0.001%): $|c_{i+1} - c_i| < \varepsilon$.

If the aforesaid difference is greater than or equal to the preset threshold $\varepsilon$, the method proceeds to step 26, for updating the estimated thickness value: $c_i = c_{i+1}$, then returning, with iterative technique, to step 23 described above.

On the contrary, if the aforesaid difference is lower than the preset threshold $\varepsilon$, the method ends with the estimation of the characteristic variable $\alpha_0$ and of the thickness c, at the values corresponding to the last iteration.

The aforesaid algorithm typically requires a limited number (for example equal to three) of iterations to arrive at the optimal thickness estimation; as a consequence, the proposed method allows an optimization of the value of the characteristic variable $\alpha_0$ with a limited increase in terms of computational cost.

In a different embodiment, the optimization module 16 is configured to implement, for the aforesaid optimization of the characteristic variable $\alpha_0$ (and the consequent estimation of the thickness c) an analytical method, i.e. entailing the use of an analytical formula.

In this regard, starting from the ideal trend of the characteristic variable $\alpha_0$ relative to the thickness c of the object 5, as shown by the plot of Figure 8, the optimization module 16 implements an algebraic approach that is based on a polynomial approximation of the same characteristic variable $\alpha_0$.

In particular, a quadratic polynomial approximation of the function $\alpha_0 = \alpha_0(c)$ can be implemented, in accordance with the following analytical formula:

$$c = \frac{[\alpha_0' + \alpha_0'' \cdot c + \alpha_0''' \cdot c^2]}{\sigma \cdot \mu_0 \cdot \pi \cdot f_{min}}$$

wherein $\alpha_0'$, $\alpha_0''$ and $\alpha_0'''$ are the three coefficients of the second-degree polynomial; the aforesaid Figure 8 reports in a solid line the trend of this polynomial approximation.

For the determination of the aforesaid three coefficients required to define the interpolating polynomial, three one-off measurements on three known thicknesses are sufficient (physical calibration process) or, alternatively, numerical calculations (semi-analytical process) can be performed.

The use of the aforesaid quadratic interpolation is particularly efficient for calibration purposes, for the sake of simplicity and number of calibration tests or calculations required, allowing an efficient and fast estimation of the thickness, given the estimation of the peak frequency $f_{min}$.

However, it is pointed out that the same operation can be carried out by considering an approximation of the trend of the characteristic variable $\alpha_0$ by means of a polynomial of third degree (or even of greater degree).

For example, in the case of a third-degree polynomial approximation the analytical formula implemented is as follows:

$$c = \frac{[\alpha_0' + \alpha_0'' \cdot c + \alpha_0''' \cdot c^2 + \alpha_0'''' \cdot c^3]}{\sigma \cdot \mu_0 \cdot \pi \cdot f_{min}}$$

wherein $\alpha_0'$, $\alpha_0''$, $\alpha_0'''$ and $\alpha_0''''$ are in this case the four coefficients of the third-degree polynomial to be determined.

Using a polynomial with a higher degree, smaller approximation errors are obtained, however, with a consequent greater number of measurements required in the calibration step; it may therefore be useful in this case to resort to calibration not by means of physical specimens but by means of data obtained semi-analytically with numerical models.

In general, with the polynomial approximation it is possible to "correct" the value of the characteristic variable $\alpha_0$ dependent on the thickness of the object 5 under examination and drastically reduce the error contribution in the estimation of the thickness c of the same object 5.

For example, it is possible to show that, using the quadratic polynomial approximation (and the aforesaid three coefficients $\alpha_0'$, $\alpha_0''$ and $\alpha_0'''$):

$$c = \frac{[\alpha_0' + \alpha_0'' \cdot c + \alpha_0''' \cdot c^2]}{\sigma \cdot \mu_0 \cdot \pi \cdot f_{min}} = \frac{[\alpha_0' + \alpha_0'' \cdot c + \alpha_0''' \cdot c^2]}{k}$$

the thickness c of the object 5 can be estimated starting from the peak frequency $f_{min}$ by means of the following expression:

$$c = \frac{-\dfrac{\alpha_0''}{k} \pm \sqrt{\left(\dfrac{\alpha_0''}{k}\right)^2 - 4 \cdot \dfrac{\alpha_0''' \cdot \alpha_0'}{k^2}}}{2 \cdot \dfrac{\alpha_0'''}{k}}$$

From what has been shown, the advantages that this solution allows to obtain are evident.

In particular, the proposed solution allows to measure the thickness of objects under test, for example non-magnetic metal laminates, by using non-contact (non-destructive) eddy-current techniques, in particular without the use of particular coupling materials and with no need for complex calibration operations.

Compared to the eddy-current techniques known to date and present in the literature, the proposed solution has significant advantages relating to the probe excitation technique and to the signal processing methodology, which allow measurements to be obtained in a short time with accuracies in line with the industrial requirements and with no need for a prior knowledge about the nominal thickness of the element being measured.

As discussed above, in particular, aspects of the proposed solution entail:

the use of a multi-sinusoidal excitation signal combined with a compensation by using interpolating polynomials that allow to obtain a minimization of the measurement times without compromising the measurement accuracy; and

two alternative methodologies for identifying the parameters (in particular, of the aforesaid characteristic variable $\alpha_0$) useful for estimating the final thickness that allow freeing the measurement from prior knowledge (such as the nominal thickness of the element to be measured) while ensuring an adequate level of accuracy.

Finally, it is clear that modifications and variations can be made to what is described and shown herein without departing from the scope of the present solution, as defined in the appended claims.

For example, it is underlined that the described solution can be used for any application, in particular in the industrial field, in which it is required to measure the thickness, in particular without contact, of an element of any non-magnetic conductive material.

## Claims

1.  A thickness measuring device (1) for measuring thickness of a conductive non-magnetic object (5), comprising:

an eddy-current sensor stage (2) having a coil element (4) configured to be arranged at a given distance (d) from the object (5) and an excitation module (2a) configured to provide an excitation signal ($S_{in}$) to the coil element (4) in order to generate eddy currents; and

a processing stage (40) configured to carry out processing on detection signals ($S_d$) provided by the coil element (4) as a function of the magnetic field generated by the eddy currents, in order to estimate a thickness (c) of the object (5),

wherein said processing stage (40) is configured to estimate said thickness (c) as a function of a peak frequency ($f_{min}$) associated with an impedance variation occurring when the coil element (4) is arranged near the object (5) as compared to when the coil element (4) is placed in air and as a function of a characteristic variable ($\alpha_0$) associated with said coil element (4) and with said object (5),

wherein said processing stage (40) comprising an optimization module (16) configured to estimate a value of said characteristic variable ($\alpha_0$) and a thickness estimation module (18) configured to estimate a corresponding value of said thickness (c),

wherein said processing stage (40) is configured to estimate said thickness (c) by means of the following expression:

$$c = \frac{\alpha_0}{\sigma \cdot \mu_0 \cdot \pi \cdot f_{min}}$$

wherein $\sigma$ is the electrical conductivity of the object (5), $\mu_0$ is the vacuum magnetic permeability, $f_{min}$ is said peak frequency and $\alpha_0$ is the value of said characteristic variable estimated by said optimization module (16), **characterized in that** said optimization module (16) is configured to estimate the value of said characteristic variable ($\alpha_0$) by means of an iterative method, which, at every iteration, corrects the value of said characteristic

variable ($\alpha_0$) and, as a consequence, of the estimated thickness (c) starting from an average value of the characteristic variable ($\alpha_0$) relating to a predefined thickness range; wherein the iterations and the consequent corrections of the value of said characteristic variable ($\alpha_0$) end when the estimated thickness of an i+1-th iteration lies within a range of error relative to the thickness estimated at a prior i-th iteration.

2. The device according to claim 1, wherein said optimization method entails: setting, in an initial step, a minimum value ($c_m$) and a maximum value ($c_M$) for said thickness (c) and a corresponding minimum value ($\alpha_m$) and a maximum value ($\alpha_M$) for said characteristic variable ($\alpha_0$); determining an initial value ($\alpha_{0,1}$) for said characteristic variable ($\alpha_0$), based on an average value between the respective minimum and maximum values; assessing a first estimated thickness ($c_1$) as a function of the initial value ($\alpha_{0,1}$) of the characteristic variable ($\alpha_0$) and of said peak frequency ($f_{min}$); iteratively calculating, at every i-th iteration, a corrective value ($\alpha_{0,i+1}$) of the characteristic variable ($\alpha_0$) as a function of an i-th value ($c_i$) of the estimates thickness, said i-th value ($c_i$) corresponding at a first iteration to the first estimated thickness ($c_1$); calculating a new i+1-th value ($c_{i+1}$) of the estimated thickness as a function of the corrective value ($\alpha_{0,i+1}$) of the characteristic variable and of said peak frequency ($f_{min}$); if the difference between the i+1-th value ($c_{i+1}$) and the i-th value ($c_i$) of the estimated thickness (c) is not smaller, in absolute value, than a predetermined threshold ($\varepsilon$), updating, with an iterative technique, the value of the estimated thickness; otherwise, attributing the last iteration of the estimated thickness value to the value of said thickness (c).

3. The device according to claim 2, wherein the corrective value ($\alpha_{0,i+1}$) of the characteristic variable ($\alpha_0$) is given by:

$$\alpha_{0,i+1} = \frac{(c_i - c_M) \cdot \alpha_m - (c_i - c_m) \cdot \alpha_M}{(c_m - c_M)}$$

and wherein the new i+1-th value ($c_{i+1}$) of the estimated thickness is given by:

$$c_{i+1} = \frac{\alpha_{0,i+1}}{\sigma \cdot \mu_0 \cdot \pi \cdot f_{min}}$$

and wherein the value of said peak frequency ($f_{min}$) is constant at every iteration.

4. A thickness measuring device (1) for measuring thickness of a conductive non-magnetic object (5), comprising:

an eddy-current sensor stage (2) having a coil element (4) configured to be arranged at a given distance (d) from the object (5) and an excitation module (2a) configured to provide an excitation signal ($S_{in}$) to the coil element (4) in order to generate eddy currents; and
a processing stage (40) configured to carry out processing on detection signals ($S_d$) provided by the coil element (4) as a function of the magnetic field generated by the eddy currents, in order to estimate a thickness (c) of the object (5),
wherein said processing stage (40) is configured to estimate said thickness (c) as a function of a peak frequency ($f_{min}$) associated with an impedance variation occurring when the coil element (4) is arranged near the object (5) as compared to when the coil element (4) is placed in air and as a function of a characteristic variable ($\alpha_0$) associated with said coil element (4) and with said object (5),
wherein said processing stage (40) comprising an optimization module (16) configured to estimate a value of said characteristic variable ($\alpha_0$) and a thickness estimation module (18) configured to estimate a corresponding value of said thickness (c),
wherein said processing stage (40) is configured to estimate said thickness (c) by means of the following expression:

$$c = \frac{\alpha_0}{\sigma \cdot \mu_0 \cdot \pi \cdot f_{min}}$$

wherein $\sigma$ is the electrical conductivity of the object (5), $\mu_0$ is the vacuum magnetic permeability, $f_{min}$ is said peak frequency and $\alpha_0$ is the value of said characteristic variable estimated by said optimization module (16), **characterized in that** said optimization module (16) is configured to calculate the value of said characteristic variable ($\alpha_0$) by means of an analytical method, based on a polynomial approximation associated with the

characteristic variable $(\alpha_0)$.

5. The device according to claim 4, wherein said polynomial approximation is based on a quadratic polynomial approximation, in accordance with the following analytical formula:

$$c = \frac{[\alpha_0' + \alpha_0'' \cdot c + \alpha_0''' \cdot c^2]}{\sigma \mu_0 \pi f_{min}}$$

wherein $\alpha_0'$, $\alpha_0''$ and $\alpha_0'''$ are a first, second and third coefficients of the second-degree polynomial.

6. The device according to claim 5, wherein, using the quadratic polynomial approximation and said first, second and third coefficients $\alpha_0'$, $\alpha_0''$ and $\alpha_0'''$, the thickness (c) is estimated starting from the peak frequency $(f_{min})$ by means of the following expression:

$$c = \frac{-\frac{\alpha_0''}{k} \pm \sqrt{\left(\frac{\alpha_0''}{k}\right)^2 - 4 \cdot \frac{\alpha_0''' \cdot \alpha_0'}{k^2}}}{2 \cdot \frac{\alpha_0'''}{k}}$$

wherein $k = \sigma \cdot \mu_0 \cdot \pi \cdot f_{min}$.

7. The device according to any one of the preceding claims, wherein said excitation module (2a) is configured to provide a multi-frequency or multi-sine excitation signal $(S_{in})$ configured to simultaneously energize the coil element (4) with a number of sinusoidal contributions at desired frequencies.

8. The device according to claim 7, wherein said processing stage (40) comprises a function determination module (12) configured to obtain, starting from a frequency transform of said detection signals $(S_d)$, a measurement function $(\Delta R/\omega)$ linked to the variation between the impedance values measured by the coil element (4) in air, $\dot{Z}_{m,air}$, and near the object (5), $\dot{Z}_{m,laminate}$, according to the following expression:

$$\frac{\Delta R}{\omega} = Im\left(\frac{\dot{Z}_{m,laminate}(f) - \dot{Z}_{m,air}(f)}{j \cdot 2 \cdot \pi \cdot f}\right) = Re\left(\frac{-[\dot{Z}_{m,laminate}(f) - \dot{Z}_{m,air}(f)]}{2 \cdot \pi \cdot f}\right)$$

wherein $\omega = 2 \cdot \pi \cdot f$ is the angular frequency and f the frequency of the excitation signal $(S_{in})$.

9. The device according to claim 8, wherein said processing stage (40) comprises a polynomial interpolation module (14) configured to carry out a polynomial interpolation of data processed by said function determination module (12), so as to determine an interpolation function which performs a fitting of said data, in order to estimate the value of said peak frequency $(f_{min})$.

10. A method for measuring thickness (1) of a conductive non-magnetic object (5), comprising:

arranging an eddy-current sensor stage (2), having a coil element (4), at a given distance (d) from the object (5) ; providing an excitation signal $(S_{in})$ to the coil element (4) in order to generate eddy currents; and processing detection signals $(S_d)$ provided by the coil element (4) as a function of the magnetic field generated by the eddy currents, in order to estimate a thickness (c) of the object (5), wherein processing comprises estimating said thickness (c) as a function of a peak frequency $(f_{min})$ associated with an impedance variation occurring when the coil element (4) is placed near the object (5) as compared to when the coil element (4) is placed in air and as a function of a characteristic variable $(\alpha_0)$ associated with said coil element (4) and with said object (5), wherein processing comprises estimating an optimized value of said characteristic variable $(\alpha_0)$ and estimating a corresponding value of said thickness (c),

wherein estimating comprises determining said thickness (c) by means of the following expression:

$$c = \frac{\alpha_0}{\sigma \cdot \mu_0 \cdot \pi \cdot f_{min}}$$

wherein $\sigma$ is the electrical conductivity of the object (5), $\mu_0$ is vacuum magnetic permeability, $f_{min}$ is said peak frequency and $\alpha_0$ is said characteristic variable estimated by said optimization module (16),
**characterized by** comprising calculating the value of said characteristic variable ($\alpha_0$) by means of an iterative method, which, at every iteration, corrects the value of said characteristic variable ($\alpha_0$) and, as a consequence, of the thickness (c) starting from an average value of the characteristic variable ($\alpha_0$) relating to a predefined thickness range; wherein the iterations and the consequent corrections of the value of said characteristic variable ($\alpha_0$) end when the estimated thickness of an i+1-th iteration lies within a range of error relative to the thickness estimated at a prior i-th iteration.

11. A method for measuring thickness (1) of a conductive non-magnetic object (5), comprising:

arranging an eddy-current sensor stage (2), having a coil element (4), at a given distance (d) from the object (5);
providing an excitation signal ($S_{in}$) to the coil element (4) in order to generate eddy currents; and
processing detection signals ($S_d$) provided by the coil element (4) as a function of the magnetic field generated by the eddy currents, in order to estimate a thickness (c) of the object (5),
wherein processing comprises estimating said thickness (c) as a function of a peak frequency ($f_{min}$) associated with an impedance variation occurring when the coil element (4) is placed near the object (5) as compared to when the coil element (4) is placed in air and as a function of a characteristic variable ($\alpha_0$) associated with said coil element (4) and with said object (5),
wherein processing comprises estimating an optimized value of said characteristic variable ($\alpha_0$) and estimating a corresponding value of said thickness (c),
wherein estimating comprises determining said thickness (c) by means of the following expression:

$$c = \frac{\alpha_0}{\sigma \cdot \mu_0 \cdot \pi \cdot f_{min}}$$

wherein $\sigma$ is the electrical conductivity of the object (5), $\mu_0$ is vacuum magnetic permeability, $f_{min}$ is said peak frequency and $\alpha_0$ is said characteristic variable estimated by said optimization module (16),
**characterized by** comprising calculating the value of said characteristic variable ($\alpha_0$) by means of an analytical method, based on a polynomial approximation associated with the characteristic variable ($\alpha_0$).

## Patentansprüche

1. Dickenmessgerät (1) zum Messen der Dicke eines leitenden, nichtmagnetischen Objekts (5), umfassend:

eine Wirbelstromsensorstufe (2) mit einem Spulenelement (4), das so konfiguriert ist, dass es in einem gegebenen Abstand (d) von dem Objekt (5) angeordnet wird, und einem Erregungsmodul (2a), das so konfiguriert ist, dass es ein Erregungssignal ($S_{in}$) an das Spulenelement (4) liefert, um Wirbelströme zu erzeugen; und
eine Verarbeitungsstufe (40), die so konfiguriert ist, dass sie eine Verarbeitung auf Erfassungssignalen (Sd) durchführt, die von dem Spulenelement (4) als Funktion des durch die Wirbelströme erzeugten Magnetfelds geliefert werden, um eine Dicke (c) des Objekts (5) zu schätzen,
wobei die Verarbeitungsstufe (40) so konfiguriert ist, dass sie die Dicke (c) als Funktion einer Spitzenfrequenz ($f_{min}$), die mit einer Impedanzänderung assoziiert ist, die auftritt, wenn das Spulenelement (4) in der Nähe des Objekts (5) angeordnet ist, im Vergleich zu dem Zeitpunkt, an dem das Spulenelement (4) in Luft platziert wird, und als Funktion einer Kenngröße ($\alpha_0$), die
mit dem Spulenelement (4) und mit dem Objekt (5) assoziiert ist, schätzt, wobei die Verarbeitungsstufe (40) ein Optimierungsmodul (16), das konfiguriert ist, um einen Wert der Kenngröße ($\alpha_0$) zu schätzen, und ein Dickenschätzungsmodul (18), das konfiguriert ist, um einen entsprechenden Wert der Dicke (c) zu schätzen, umfasst,
wobei die Verarbeitungsstufe (40) so konfiguriert ist, dass sie die Dicke (c) mittels des folgenden Ausdrucks schätzt:

$$c = \frac{\alpha_0}{\sigma \cdot \mu_0 \cdot \pi \cdot f_{min}}$$

wobei $\sigma$ die elektrische Leitfähigkeit des Objekts (5) ist,
$\mu_0$ die magnetische Vakuumpermeabilität ist, $f_{min}$ die Spitzenfrequenz ist und $\alpha_0$ der Wert der Kenngröße ist, der von dem Optimierungsmodul (16) geschätzt wird,
**dadurch gekennzeichnet, dass** das Optimierungsmodul (16) so konfiguriert ist,
dass es den Wert der Kenngröße ($\alpha_0$) mittels eines iterativen Verfahrens schätzt, das bei jeder Iteration den Wert der Kenngröße ($\alpha_0$) und infolgedessen der geschätzten Dicke (c) ausgehend von einem Mittelwert der Kenngröße ($\alpha_0$) in Bezug auf einen vordefinierten Dickenbereich korrigiert; wobei die Iterationen und die sich daraus ergebenden Korrekturen des Werts der Kenngröße ($\alpha_0$) enden, wenn die geschätzte Dicke einer i+1-ten Iteration innerhalb eines Fehlerbereichs relativ zu der bei einer vorherigen i-ten Iteration geschätzten Dicke liegt.

2. Gerät nach Anspruch 1, wobei das Optimierungsverfahren beinhaltet: Einstellen eines Minimalwerts ($c_m$) und eines Maximalwerts ($c_M$) für die Dicke (c) und eines entsprechenden Minimalwerts ($\alpha_m$) und eines Maximalwerts ($\alpha_M$) für die Kenngröße ($\alpha_0$) in einem ersten Schritt; Bestimmen eines Anfangswerts ($\alpha_{0,1}$) für die Kenngröße ($\alpha_0$) basierend auf einem Mittelwert zwischen

jeweiligen Minimal- und Maximalwerten; Bewerten einer ersten geschätzten Dicke ($c_i$) als Funktion des Anfangswerts ($\alpha_{0,1}$) der Kenngröße ($\alpha_0$) und der Spitzenfrequenz ($f_{min}$); iteratives Berechnen eines Korrekturwerts ($\alpha0,1+i$) der Kenngröße ($\alpha_0$) als Funktion eines i-ten Werts ($c_i$) der geschätzten Dicke bei jeder i-ten Iteration, wobei der i-te Wert ($c_i$) bei einer ersten Iteration der ersten geschätzten Dicke ($c_1$) entspricht;
Berechnen eines neuen i+1-ten Werts ($c_i+1$) der geschätzten Dicke als Funktion des Korrekturwerts ($\alpha_{0,1}+i$) der Kenngröße und der Spitzenfrequenz ($f_{min}$); wenn die Differenz zwischen dem i+1-ten Wert ($c_i+1$) und dem i-ten Wert ($c_i$) der geschätzten Dicke (c) im absoluten Wert nicht kleiner als ein vorbestimmter Schwellenwert ($\varepsilon$) ist, Aktualisieren des Werts der geschätzten Dicke mit einer iterativen Technik; andernfalls Zuordnen der letzten Iteration des geschätzten Dickenwerts zu dem Wert der Dicke (c).

3. Gerät nach Anspruch 2, wobei der

Korrekturwert ($\alpha_{0,1}+i$) der Kenngröße ($\alpha_0$) gegeben ist durch:

$$\alpha_{0,i+1} = \frac{(c_i - c_M) \cdot \alpha_m - (c_i - c_m) \cdot \alpha_M}{(c_m - c_M)}$$

und wobei der neue i+1-te Wert ($C_{i+1}$) der geschätzten Dicke gegeben ist durch:

$$c_{i+1} = \frac{\alpha_{0,i+1}}{\sigma \cdot \mu_0 \cdot \pi \cdot f_{min}}$$

und wobei der Wert der Spitzenfrequenz ($f_{min}$) bei jeder Iteration konstant ist.

4. Dickenmessgerät (1) zum Messen der Dicke eines leitenden, nichtmagnetischen Objekts (5), umfassend:

eine Wirbelstromsensorstufe (2) mit einem Spulenelement (4), das so konfiguriert ist, dass es in einem gegebenen Abstand (d) von dem Objekt (5) angeordnet wird, und einem Erregungsmodul (2a), das so konfiguriert ist, dass es ein Erregungssignal ($S_{in}$) an das Spulenelement (4) liefert, um Wirbelströme zu erzeugen; und
eine Verarbeitungsstufe (40), die so konfiguriert ist, dass sie eine Verarbeitung auf Erfassungssignalen (Sd) durchführt, die von dem Spulenelement (4) als Funktion des durch die Wirbelströme erzeugten Magnetfelds geliefert werden, um eine Dicke (c) des Objekts (5) zu schätzen,
wobei die Verarbeitungsstufe (40) so konfiguriert ist, dass sie die Dicke (c) als Funktion einer Spitzenfrequenz ($f_{min}$), die mit einer Impedanzänderung assoziiert ist, die auftritt, wenn das Spulenelement (4) in der Nähe des Objekts (5) angeordnet ist, im Vergleich zu dem Zeitpunkt, an dem das Spulenelement (4) in Luft platziert wird, und als Funktion einer Kenngröße ($\alpha_0$), die mit dem Spulenelement (4) und dem Objekt (5) assoziiert ist, schätzt, wobei die Verarbeitungsstufe (40) ein Optimierungsmodul (16), das so konfiguriert ist, dass es einen Wert der Kenngröße ($\alpha_0$) schätzt, und ein Dickenschätzungsmodul (18), das so konfiguriert ist, dass es einen entsprechenden Wert der Dicke (c) schätzt, umfasst,

wobei die Verarbeitungsstufe (40) so konfiguriert ist, dass sie die Dicke (c) mittels des folgenden Ausdrucks schätzt:

$$c = \frac{\alpha_0}{\sigma \cdot \mu_0 \cdot \pi \cdot f_{min}}$$

wobei $\sigma$ die elektrische Leitfähigkeit des Objekts (5) ist, $\mu_0$ die magnetische Vakuumpermeabilität ist, $f_{min}$ die Spitzenfrequenz ist und $\alpha_0$ der Wert der Kenngröße ist, der durch das Optimierungsmodul (16) geschätzt wird, **dadurch gekennzeichnet, dass** das Optimierungsmodul (16) konfiguriert ist, um den Wert der Kenngröße ($\alpha_0$) mittels eines analytischen Verfahrens basierend auf einer polynomialen Approximation zu berechnen, die mit der Kenngröße ($\alpha_0$) assoziiert ist.

5. Gerät nach Anspruch 4, wobei die polynomiale Approximation auf einer quadratischen polynomialen Approximation gemäß der folgenden analytischen Formel basiert:

$$c = \frac{[\alpha_0' + \alpha_0'' \cdot c + \alpha_0''' \cdot c^2]}{\sigma \mu_0 \pi f_{min}}$$

wobei $\alpha_0'$, $\alpha_0''$ und $\alpha_0'''$ ein erster, zweiter und dritter Koeffizient des Polynoms zweiten Grades sind.

6. Gerät nach Anspruch 5, wobei unter Verwendung der quadratischen polynomialen Approximation und des ersten, zweiten und dritten Koeffizienten $\alpha_0'$, $\alpha_0''$ und $\alpha_0'''$ die Dicke (c) ausgehend von der Spitzenfrequenz ($f_{min}$) mittels des folgenden Ausdrucks geschätzt wird:

$$c = \frac{-\frac{\alpha_0''}{k} \pm \sqrt{\left(\frac{\alpha_0''}{k}\right)^2 - 4 \cdot \frac{\alpha_0''' \cdot \alpha_0'}{k^2}}}{2 \cdot \frac{\alpha_0'''}{k}}$$

wobei $k = \sigma \cdot \mu_0 \cdot \pi \cdot f_{min}$.

7. Gerät nach einem der vorhergehenden Ansprüche, wobei das Anregungsmodul (2a) so konfiguriert ist, dass es ein Mehrfrequenz- oder Mehrsinus-Anregungssignal ($S_{in}$) bereitstellt, das konfiguriert ist, um das Spulenelement (4) gleichzeitig mit einer Anzahl von sinusförmigen Beiträgen bei gewünschten Frequenzen anzusteuern.

8. Gerät nach Anspruch 7, wobei die Verarbeitungsstufe (40) ein Funktionsbestimmungsmodul (12) umfasst, das konfiguriert ist, um ausgehend von einer Frequenztransformation der Erfassungssignale ($S_d$) eine Messfunktion ($\Delta R/\omega$) zu erhalten, die mit der Veränderung zwischen den von dem Spulenelement (4) gemessenen Impedanzwerten in Luft, $\dot{Z}_{m,Luft}$ und in der Nähe des Objekts (5), $\dot{Z}_{m,Laminat}$ gemäß dem folgenden Ausdruck verknüpft ist:

$$\frac{\Delta R}{\omega} = Im\left(\frac{\dot{Z}_{m,laminate}(f) - \dot{Z}_{m,air}(f)}{j \cdot 2 \cdot \pi \cdot f}\right) = Re\left(\frac{-[\dot{Z}_{m,laminate}(f) - \dot{Z}_{m,air}(f)]}{2 \cdot \pi \cdot f}\right)$$

wobei $\omega = 2 \cdot \pi \cdot f$ die Kreisfrequenz und f die Frequenz des Anregungssignals ($S_{in}$) ist.

9. Gerät nach Anspruch 8, wobei die Verarbeitungsstufe (40) ein Polynominterpolationsmodul (14) umfasst, das konfiguriert ist, um eine Polynominterpolation von Daten durchzuführen, die von dem Funktionsbestimmungsmodul (12) verarbeitet werden, um eine Interpolationsfunktion zu bestimmen, die eine Anpassung der Daten durchführt, um den Wert der Spitzenfrequenz ($f_{min}$) zu schätzen.

10. Verfahren zum Messen der Dicke (1) eines leitenden, nichtmagnetischen Objekts (5), umfassend:

Anordnen einer Wirbelstromsensorstufe (2) mit einem Spulenelement (4) in einem vorgegebenen Abstand (d) von dem Objekt (5);
Bereitstellen eines Anregungssignals ($S_{in}$) an das Spulenelement (4), um Wirbelströme zu erzeugen; und Verarbeiten von Erfassungssignalen ($S_d$), die von dem Spulenelement (4) als Funktion des durch die Wirbelströme erzeugten Magnetfelds geliefert werden, um eine Dicke (c) des Objekts (5) zu schätzen, wobei das Verarbeiten das Schätzen der Dicke (c) als Funktion einer Spitzenfrequenz ($f_{min}$), die mit einer Impedanzänderung assoziiert ist, die auftritt, wenn das Spulenelement (4) in der Nähe des Objekts (5) platziert wird, im Vergleich zu dem Zeitpunkt, an dem das Spulenelement (4) in Luft platziert wird, und als Funktion einer Kenngröße ($\alpha_0$), die mit dem Spulenelement (4) und dem Objekt (5) assoziiert ist, umfasst, wobei das Verarbeiten das Schätzen eines optimierten Werts der Kenngröße ($\alpha_0$) und das Schätzen eines entsprechenden Werts der Dicke (c) umfasst, wobei das Schätzen das Bestimmen der Dicke (c) mittels des folgenden Ausdrucks umfasst:

$$c = \frac{\alpha_0}{\sigma \cdot \mu_0 \cdot \pi \cdot f_{min}}$$

wobei $\sigma$ die elektrische Leitfähigkeit des Objekts (5) ist, $\mu_0$ die magnetische Vakuumpermeabilität ist, $f_{min}$ die Spitzenfrequenz ist und $\alpha_0$ die Kenngröße ist, die durch das Optimierungsmodul (16) geschätzt wird, **dadurch gekennzeichnet, dass** es das Berechnen des Werts der Kenngröße ($\alpha_0$) mittels eines iterativen Verfahrens umfasst, das bei jeder Iteration den Wert der Kenngröße ($\alpha_0$) und infolgedessen der Dicke (c) ausgehend von einem Mittelwert der Kenngröße in Bezug auf einen vordefinierten Dickenbereich korrigiert; wobei die Iterationen und die sich daraus ergebenden Korrekturen des Werts der Kenngröße ($\alpha_0$) enden, wenn die geschätzte Dicke einer i+1-ten Iteration innerhalb eines Fehlerbereichs relativ zu der bei einer vorherigen i-ten Iteration geschätzten Dicke liegt.

11. Verfahren zum Messen der Dicke (1) eines leitenden, nichtmagnetischen Objekts (5), umfassend:

Anordnen einer Wirbelstromsensorstufe (2) mit einem Spulenelement (4) in einem vorgegebenen Abstand (d) von dem Objekt (5);
Bereitstellen eines Anregungssignals ($S_{in}$) an das Spulenelement (4), um Wirbelströme zu erzeugen; und Verarbeiten von Erfassungssignalen ($S_d$), die von dem Spulenelement (4) als Funktion des durch die Wirbelströme erzeugten Magnetfelds geliefert werden, um eine Dicke (c) des Objekts (5) zu schätzen, wobei das Verarbeiten das Schätzen der Dicke (c) als Funktion einer Spitzenfrequenz ($f_{min}$), die mit einer Impedanzänderung assoziiert ist, die auftritt, wenn das Spulenelement (4) in der Nähe des Objekts (5) platziert wird, im Vergleich zu dem Zeitpunkt, an dem das Spulenelement (4) in Luft platziert wird, und als Funktion einer Kenngröße ($\alpha_0$), die mit dem Spulenelement (4) und dem Objekt (5) assoziiert ist, umfasst, wobei das Verarbeiten das Schätzen eines optimierten Werts der Kenngröße ($\alpha_0$) und das Schätzen eines entsprechenden Werts der Dicke (c) umfasst, wobei das Schätzen das Bestimmen der Dicke (c) mittels des folgenden Ausdrucks umfasst:

$$c = \frac{\alpha_0}{\sigma \cdot \mu_0 \cdot \pi \cdot f_{min}}$$

wobei $\sigma$ die elektrische Leitfähigkeit des Objekts (5) ist, $\mu_0$ die magnetische Vakuumpermeabilität ist, $f_{min}$ die Spitzenfrequenz ist und $\alpha_0$ die Kenngröße ist, die durch das Optimierungsmodul (16) geschätzt wird,

**dadurch gekennzeichnet, dass** es das Berechnen des Werts der Kenngröße ($\alpha_0$) mittels eines analytischen Verfahrens, basierend auf einer polynomialen Approximation, die mit der Kenngröße ($\alpha_0$) assoziiert ist, umfasst.

**Revendications**

1. Dispositif de mesure d'épaisseur (1) pour mesurer l'épaisseur d'un objet conducteur non magnétique (5), comprenant :

un étage de capteur de courants de Foucault (2) ayant un élément de bobine (4) configuré pour être disposé à une distance donnée (d) de l'objet (5) et un module d'excitation (2a) configuré pour fournir un signal d'excitation ($S_{in}$) à l'élément de bobine (4) afin de générer des courants de Foucault ; et
un étage de traitement (40) configuré pour effectuer un traitement sur les signaux de détection (Sct) fournis par l'élément de bobine (4) en fonction du champ magnétique généré par les courants de Foucault, afin d'estimer une épaisseur (c) de l'objet (5),
dans lequel ledit étage de traitement (40) est configuré pour estimer ladite épaisseur (c) en fonction d'une fréquence de crête ($f_{min}$) associée à une variation d'impédance se produisant lorsque l'élément de bobine (4) est disposé à proximité de l'objet (5) par rapport à lorsque l'élément de bobine (4) est placé dans l'air et en fonction d'une variable caractéristique ($\alpha_0$) associée audit
élément de bobine (4) et audit objet (5), ledit étage de traitement (40) comprenant un module d'optimisation (16) configuré pour estimer une valeur de ladite variable caractéristique ($\alpha_0$) et un module d'estimation de l'épaisseur (18) configuré pour estimer une valeur correspondante de ladite épaisseur (c),
dans lequel ledit étage de traitement (40) est configuré pour estimer ladite épaisseur (c) au moyen de l'expression suivante :

$$c = \frac{\alpha_0}{\sigma \cdot \mu_0 \cdot \pi \cdot f_{min}}$$

dans lequel $\sigma$ est la conductivité électrique de l'objet (5),
$\mu_0$ est la perméabilité magnétique du vide, $f_{min}$ est ladite fréquence de crête et $\alpha_0$ est la valeur de ladite variable caractéristique estimée par ledit module d'optimisation (16),
**caractérisé en ce que** ledit module d'optimisation (16) est configuré pour estimer la valeur de ladite variable caractéristique ($\alpha_0$) au moyen d'une méthode itérative qui, à chaque itération, corrige la valeur de ladite variable caractéristique ($\alpha_0$) et, par conséquent, de l'épaisseur estimée (c) à partir d'une valeur moyenne de la variable caractéristique ($\alpha_0$) relative à une plage d'épaisseur prédéfinie ; les itérations et les corrections consécutives de la valeur de ladite variable caractéristique ($\alpha_0$) s'achevant lorsque l'épaisseur estimée lors d'une i+1-ième itération se situe dans une plage d'erreur par rapport à l'épaisseur estimée lors d'une i-ième itération antérieure.

2. Dispositif selon la revendication 1, dans lequel ladite méthode d'optimisation consiste à : fixer, dans une étape initiale, une valeur minimale *($c_m$)* et une valeur maximale *($c_M$)* pour ladite épaisseur (c) et une valeur minimale *($\alpha_m$)* et une valeur maximale ($\alpha_M$) correspondantes pour ladite variable caractéristique ($\alpha_0$) ; déterminer une valeur initiale ($\alpha_{0,1}$) pour ladite variable caractéristique ($\alpha_0$), sur la base d'une valeur moyenne entre les valeur minimales
et maximales respectives ; évaluer une première épaisseur estimée *($c_i$)* en fonction de la valeur initiale ($\alpha_{0,1}$) de la variable caractéristique ($\alpha_0$) et de ladite fréquence de crête ($f_{min}$) ; calculer itérativement, à chaque i-ième itération, une valeur corrective ($\alpha_{0,i+1}$) de la variable caractéristique ($\alpha_0$) en fonction d'une i-ième valeur ($c_i$) de l'épaisseur estimée, ladite i-ième valeur ($c_i$) correspondant, à une première itération, à la première épaisseur estimée ($c_1$) ;
calculer une nouvelle i+1ième valeur *($c_{i+1}$)* de l'épaisseur estimée en fonction de la valeur corrective ($\alpha_{0,1+i}$) de la variable caractéristique et de ladite fréquence de crête ($f_{min}$) ; si la différence entre la i+1-ième valeur ($c_{i+1}$) et la i-ième valeur($c_i$) de l'épaisseur estimée (c) n'est pas inférieure, en valeur absolue, à un seuil prédéterminé ($\varepsilon$), mettre à jour, par une technique itérative, la valeur de l'épaisseur estimée ; dans le cas contraire, attribuer la dernière itération de la valeur de l'épaisseur estimée à la valeur de ladite épaisseur (c).

3. Dispositif selon la revendication 2, dans lequel

la valeur corrective *($\alpha_{0,1+i}$)* de la variable caractéristique ($\alpha_0$) est donnée par :

$$\alpha_{0,i+1} = \frac{(c_i - c_M) \cdot \alpha_m - (c_i - c_m) \cdot \alpha_M}{(c_m - c_M)}$$

et dans lequel la nouvelle i+1-ième valeur ($C_{i+1}$) de l'épaisseur estimée est donnée par :

$$c_{i+1} = \frac{\alpha_{0,i+1}}{\sigma \cdot \mu_0 \cdot \pi \cdot f_{min}}$$

et dans lequel la valeur de ladite fréquence de crête ($f_{min}$) est constante à chaque itération.

4. Dispositif de mesure d'épaisseur (1) pour mesurer l'épaisseur d'un objet conducteur non magnétique (5), comprenant :

un étage de capteur de courants de Foucault (2) ayant un élément de bobine (4) configuré pour être disposé à une distance donnée (d) de l'objet (5) et un module d'excitation (2a) configuré pour fournir un signal d'excitation ($S_{in}$) à l'élément de bobine (4) afin de générer des courants de Foucault ; et
un étage de traitement (40) configuré pour effectuer un traitement sur les signaux de détection (Sct) fournis par l'élément de bobine (4) en fonction du champ magnétique généré par les courants de Foucault, afin d'estimer une épaisseur (c) de l'objet (5),
dans lequel ledit étage de traitement (40) est configuré pour estimer ladite épaisseur (c) en fonction d'une fréquence de crête ($f_{min}$) associée à une variation d'impédance se produisant lorsque l'élément de bobine (4) est disposé à proximité de l'objet (5) par rapport à lorsque l'élément de bobine (4) est placé dans l'air et en fonction d'une variable caractéristique ($\alpha_0$) associée audit élément de bobine (4) et audit objet (5),
dans lequel ledit étage de traitement (40) comprend un module d'optimisation (16) configuré pour estimer une valeur de ladite variable caractéristique ($\alpha_0$) et un module d'estimation de l'épaisseur (18) configuré pour estimer une valeur correspondante de ladite épaisseur (c),
dans lequel ledit étage de traitement (40) est configuré pour estimer ladite épaisseur (c) au moyen de l'expression suivante :

$$c = \frac{\alpha_0}{\sigma \cdot \mu_0 \cdot \pi \cdot f_{min}}$$

dans lequel $\sigma$ est la conductivité électrique de l'objet (5), $\mu_0$ est la perméabilité magnétique du vide, $f_{min}$ est ladite fréquence de crête et $\alpha_0$ est la valeur de ladite variable caractéristique estimée par ledit module d'optimisation (16),
**caractérisé en ce que** ledit module d'optimisation (16) est configuré pour calculer la valeur de ladite variable caractéristique ($\alpha_0$) au moyen d'une méthode analytique, basée sur une approximation polynomiale associée à la variable caractéristique ($\alpha_0$)

5. Dispositif selon la revendication 4, dans lequel ladite approximation polynomiale est basée sur une approximation polynomiale quadratique, conformément à la formule analytique suivante :

$$c = \frac{[\alpha_0' + \alpha_0'' \cdot c + \alpha_0''' \cdot c^2]}{\sigma \mu_0 \pi f_{min}}$$

dans laquelle $\alpha_0'$, $\alpha_0''$ et $\alpha_0'''$ sont les premier, deuxième et troisième coefficients du polynôme du second degré.

**6.** Dispositif selon la revendication 5, dans lequel, en utilisant l'approximation polynomiale quadratique et lesdits premier, deuxième et troisième coefficients $\alpha_0'$, $\alpha_0''$ et $\alpha_0'''$, l'épaisseur (c) est estimée à partir de la fréquence de crête (fmin) au moyen de l'expression suivante :

$$c = \frac{-\dfrac{\alpha_0''}{k} \pm \sqrt{\left(\dfrac{\alpha_0''}{k}\right)^2 - 4 \cdot \dfrac{\alpha_0''' \cdot \alpha_0'}{k^2}}}{2 \cdot \dfrac{\alpha_0'''}{k}}$$

dans lequel $k = \sigma \cdot \mu_0 \cdot \pi \cdot f_{min}$.

**7.** Dispositif selon l'une quelconque des revendications précédentes, dans lequel ledit module d'excitation (2a) est configuré pour fournir un signal d'excitation multifréquence ou multisinusoïdal ($S_{in}$) configuré pour alimenter simultanément l'élément de bobine (4) avec un certain nombre de contributions sinusoïdales à des fréquences souhaitées.

**8.** Dispositif selon la revendication 7, dans lequel ledit étage de traitement (40) comprend un module de détermination de fonction (12) configuré pour obtenir, à partir d'une transformée en fréquence desdits signaux de détection ($S_2$), une fonction de mesure liée à la variation entre les valeurs d'impédance mesurées par l'élément de bobine (4) dans l'air, Żm,air, et à proximité de l'objet (5), Żm, laminate selon l'expression suivante :

$$\frac{\Delta R}{\omega} = Im\left(\frac{\dot{Z}_{m,laminate}(f) - \dot{Z}_{m,air}(f)}{j \cdot 2 \cdot \pi \cdot f}\right) = Re\left(\frac{-[\dot{Z}_{m,laminate}(f) - \dot{Z}_{m,air}(f)]}{2 \cdot \pi \cdot f}\right)$$

dans lequel $\omega = 2 \cdot \pi \cdot f$ est la fréquence angulaire et f la fréquence du signal d'excitation ($S_{in}$).

**9.** Dispositif selon la revendication 8, dans lequel ledit étage de traitement (40) comprend un module d'interpolation polynomiale (14) configuré pour effectuer une interpolation polynomiale des données traitées par ledit module de détermination de fonction (12) de manière à déterminer une fonction d'interpolation qui réalise un ajustement desdites données, afin d'estimer la valeur de ladite fréquence de crête ($f_{min}$).

**10.** Procédé de mesure de l'épaisseur (1) d'un objet conducteur non magnétique (5), comprenant :

la disposition d'un étage de capteur à courants de Foucault (2), ayant un élément de bobine (4), à une distance donnée (d) de l'objet (5) ;
la fourniture d'un signal d'excitation ($S_{in}$) à l'élément de bobine (4) afin de générer des courants de Foucault ; et
le traitement des signaux de détection ($S_d$) fournis par l'élément de bobine (4) en fonction du champ magnétique généré par les courants de Foucault, afin d'estimer une épaisseur (c) de l'objet (5),
dans lequel le traitement comprend l'estimation de ladite épaisseur (c) en fonction d'une fréquence de crête ($f_{min}$) associée à une variation d'impédance se produisant lorsque l'élément de bobine (4) est placé près de l'objet (5) par rapport à lorsque l'élément de bobine (4) est placé dans l'air et en fonction d'une variable caractéristique ($\alpha_0$) associée audit élément de bobine (4) et audit objet (5),
le traitement comprenant l'estimation d'une valeur optimisée de ladite variable caractéristique ($\alpha_0$) et l'estimation d'une valeur correspondante de ladite épaisseur (c),
dans lequel l'estimation consiste à déterminer ladite épaisseur (c) au moyen de l'expression suivante :

$$c = \frac{\alpha_0}{\sigma \cdot \mu_0 \cdot \pi \cdot f_{min}}$$

dans lequel $\sigma$ est la conductivité électrique de l'objet (5), $\mu_0$ est la perméabilité magnétique du vide, $f_{min}$ est ladite fréquence de crête et $\alpha_0$ est ladite variable caractéristique estimée par ledit module d'optimisation (16),

**caractérisé par le fait de** calculer la valeur de ladite variable caractéristique ($\alpha_0$) au moyen d'une méthode itérative

qui, à chaque itération, corrige la valeur de ladite variable caractéristique ($\alpha_0$) et, par conséquent, de l'épaisseur (c) à partir d'une valeur moyenne de la variable caractéristique relative à une plage d'épaisseur prédéfinie ; dans laquelle les itérations et les corrections conséquentes de la valeur de ladite variable caractéristique ($\alpha_0$) prennent fin lorsque l'épaisseur estimée lors d'une i+1-ième itération se situe dans une plage d'erreur par rapport à l'épaisseur estimée lors d'une i-ième itération antérieure.

11. Procédé de mesure de l'épaisseur (1) d'un objet conducteur non magnétique (5), comprenant :

la disposition d'un étage de capteur à courants de Foucault (2), ayant un élément de bobine (4), à une distance donnée (d) de l'objet (5) ;
la fourniture d'un signal d'excitation ($S_{in}$) à l'élément de bobine (4) afin de générer des courants de Foucault ; et le traitement des signaux de détection ($S_d$) fournis par l'élément de bobine (4) en fonction du champ magnétique généré par les courants de Foucault, afin d'estimer une épaisseur (c) de l'objet (5),
dans lequel le traitement comprend l'estimation de ladite épaisseur (c) en fonction d'une fréquence de crête ($f_{min}$) associée à une variation d'impédance se produisant lorsque l'élément de bobine (4) est placé près de l'objet (5) par rapport à lorsque l'élément de bobine (4) est placé dans l'air et en fonction d'une variable caractéristique ($\alpha_0$) associée audit élément de bobine (4) et audit objet (5),
le traitement comprenant l'estimation d'une valeur optimisée de ladite variable caractéristique ($\alpha_0$) et l'estimation d'une valeur correspondante de ladite épaisseur (c),
dans lequel l'estimation consiste à déterminer ladite épaisseur (c) au moyen de l'expression suivante :

$$ c = \frac{\alpha_0}{\sigma \cdot \mu_0 \cdot \pi \cdot f_{min}} $$

dans lequel $\sigma$ est la conductivité électrique de l'objet (5), $\mu_0$ est la perméabilité magnétique du vide, $f_{min}$ est ladite fréquence de crête et $\alpha_0$ est ladite variable caractéristique estimée par ledit module d'optimisation (16),
**caractérisé par le fait de** calculer la valeur de ladite variable caractéristique ($\alpha_0$) au moyen d'une méthode analytique, basée sur une approximation polynomiale associée à la variable caractéristique ($\alpha_0$).

FIG.1

FIG.2

FIG.3

Thickness [mm]

FIG.8

FIG.4

FIG.5

FIG.6

```
                    ┌──────────────────────┐
                    │        Start         │
                    └──────────┬───────────┘
                               │
                               ▼
              ╱──────────────────────────────╲
             ╱             Set                 ╲        20
            ╱         $\alpha_m$, $\alpha_M$     ╲──────
            ╲         $c_m$, $c_M$              ╱
             ╲                                 ╱
              ╲─────────────────┬─────────────╱
                                │
                                ▼
              ┌──────────────────────────────┐       21
              │   $\alpha_{0,1} = \dfrac{\alpha_m + \alpha_M}{2}$   │──────
              │                              │
              └───────────────┬──────────────┘
                              │
                              ▼
              ┌──────────────────────────────┐    22
              │       Evaluate $c_1$         │──────
              └───────────────┬──────────────┘
                              │
                              ▼
              ┌──────────────────────────────┐   23                          26
              │    Calculate $\alpha_{0,i+1}$  │──────◄────────────┐   ──────
              │                              │                    │
              └───────────────┬──────────────┘         ┌──────────────────────┐
                              │                         │    $c_i = c_{i+1}$    │
                              ▼                         └──────────────────────┘
              ┌──────────────────────────────┐   24                ▲
              │    Calculate $c_{i+1}$       │──────               │
              │                              │                     │
              └───────────────┬──────────────┘                     │
                              │                                    │
                              ▼              25                     │
                      ╱───────────────╲  ──────                     │
                    ╱                   ╲         No                │
                  ╱  $|c_{i+1} - c_i| < \varepsilon$  ╲────────────────┘
                    ╲                   ╱
                      ╲───────┬───────╱
                              │
                          Yes ──► $(\alpha_0, c)$
                              │
                              ▼
                    ┌──────────────────────┐
                    │         End          │
                    └──────────────────────┘
```

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. YIN** ; **A. J. PEYTON**. Thickness measurement of non-magnetic plates using multi-frequency eddy current sensors. *NDT&E International*, January 2007, vol. 40 (1), 43-48
- **M. LU** ; **L. YIN** ; **A. J. PEYTON** ; **W. YIN**. A Novel Compensation Algorithm for Thickness Measurement Immune to Lift-Off Variations Using Eddy Current Method. *IEEE Trans. on Instrumentation and Measurement*, December 2016, vol. 65 (12), 2773-2779
- **C. V. DODD** ; **W. E. DEEDS**. Analytical Solutions to Eddy-Current Probe-Coil Problems. *Journal of Applied Physics*, May 1968, vol. 39 (6), 2829-2838

- A Novel Compensation Algorithm for Thickness Measurement Immune to Lift-Off Variations Using Eddy Current Method. **LU MINGYANG et al.** IEEE Transactions on Instrumentation and Measurement. IEEE, 2016, vol. 65, 2773-2779
- **M. R. ESLAHCHI** ; **M. DEHGHAN** ; **S. AMANI**. The third and fourth kinds of Chebyshev polynomials and best uniform approximation. *Mathematical and Computer Modelling*, March 2012, vol. 55 (5-6), 1746-1762
- **H. AKIMA**. A new method of interpolation and smooth curve fitting based on local procedures. *Journal of the ACM*, October 1970, vol. 17 (4), 589-602
- **F. N. FRITSCH** ; **R. E. CARLSON**. Monotone Piecewise Cubic Interpolation. *SIAM Journal on Numerical Analysis*, April 1980, vol. 17 (2), 238-246